(19) Europäisches Patentamt
European Patent Office
Office européen des brevets

(11) Veröffentlichungsnummer: **0 169 500**
**A2**

(12) # EUROPÄISCHE PATENTANMELDUNG

(21) Anmeldenummer: **85108966.4**

(22) Anmeldetag: **18.07.85**

(51) Int. Cl.[4]: **C 08 L 83/10**
C 08 G 77/44

(30) Priorität: **26.07.84 DE 3427496**

(43) Veröffentlichungstag der Anmeldung:
**29.01.86 Patentblatt 86/5**

(84) Benannte Vertragsstaaten:
**AT BE CH DE FR GB IT LI NL**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Schulz, Paul, Dr.**
**Gröfratherstrasse 23a**
**D-5600 Wuppertal 11(DE)**

(72) Erfinder: **Krings, Peter, Dr.**
**Wedelstrasse 72**
**D-4150 Krefeld(DE)**

(72) Erfinder: **Witthaus, Martin, Dr.**
**Burgmüllerstrasse 7**
**D-4000 Düsseldorf(DE)**

(72) Erfinder: **Waldmann, Jürgen**
**Robert-Koch-Strasse 26**
**D-4019 Monheim(DE)**

(54) **Verfahren zur Herstellung eines Polysiloxan-Blockpolymerisates.**

(57) Zwecks Herstellung eines als Schauminhibitor geeigneten Polysiloxan-Blockpolymeren wird ein Gemisch aus (A) 95 bis 65 Gewichtsteilen eines bei 20 °C flüssigen Polydimethylsiloxans und (B) 5 bis 35 Gewichtsteile eines räumlich vernetzten Polysiloxanharzes mit einem Molekulargewicht von 1000 bis 10000, das aus Strukturelementen der allgemeinen Formel

$$\begin{array}{ccccc} & & R & & \\ & & | & & \\ O_{1/2} & - & Si & - & X \\ & & | & & \\ & & Y & & \end{array}$$

besteht, worin R zu 40 bis 100 Mol-% aus einem Phenyl-, Phenylethyl- oder Alkylrest mit 2 bis 8 C-Atomen und zu 0 bis 60 Mol-% aus einem $CH_3$-Rest bestehen und X und Y die Reste R, OH, $O_{1/2}$, $CH_3$ oder $OC_nH_{2n-1}$ mit $n = 1$ bis 4 bedeuten, mit der Maßgabe, daß der Anteil der OH-Gruppen 0,1 bis 10 Gew.-%, bezogen auf das Polysiloxanharz, beträgt, in Gegenwart eines basischen Katalysators und 25 bis 40 Gew.-%, bezogen auf das Reaktionsgemisch, eines organischen, inerten Lösungsmittels, das zwischen 80 und 200 °C siedet, auf Temperaturen oberhalb 80 °C während 0,5 bis 3 Stunden erhitzt. Sobald die Viskosität des vom Lösungsmittel befreiten Reaktionsgutes einen Wert von 1000 bis 5000 mPa·s (20 °C) erreicht hat, wird die Umsetzung durch Desaktivierung des katalysators gestoppt. Das Blockpolymerisat wird anschließend mit (C) 1 bis 10 Gewichtsteilen eines Siliciumdioxid-Aerogels, das vorzugsweise silaniert ist, vermischt und erhitzt, bis die Viskosität des Produktes auf 10000 bis 160000 mPa·s (20 °C) gestiegen ist.

EP 0 169 500 A2

Croydon Printing Company Ltd.

4000 Düsseldorf, den 23.07.1984
Henkelstraße 67

HENKEL KGaA
ZR-FE/Patente
Dr. Wa/as

# P a t e n t a n m e l d u n g

D 6845/46 EP

"Verfahren zur Herstellung eines Polysiloxan-Blockpolymerisates"

Gegenstand der vorliegenden Erfindung ist ein Verfahren zur Herstellung eines Polysiloxanöl-Polysiloxanharz-Blockpolymerisates mit erhöhter Viskosität sowie dessen Verwendung als Schauminhibitor, insbesondere in Wasch- und Reinigungsmitteln.

Entschäumungsmittel auf Siloxanbasis bestehen bekanntlich aus alkyl- beziehungsweise arylsubstituierten Polysiloxanen und kolloidaler Kieselsäure. Die Wirksamkeit dieser Entschäumer hängt wesentlich von ihrer Stabilität in der zu entschäumenden Lösung und damit von ihrer Vorbehandlung ab.

Aus der US-PS 3 113 930 ist ein Verfahren zur Herstellung stabiler Polysiloxan-Entschäumer bekannt, bei dem die verwendete feinteilige Kieselsäure zunächst mit niedermolekularen Siloxanen, wie Octamethylcyclotetrasiloxan oder Tetradecamethylhexasiloxan durch Erhitzen auf Temperaturen oberhalb 350°C "silaniert" und anschliessend in Dimethylpolysiloxan-Öl suspendiert und mehrere Stunden auf Temperaturen von ca. 200 °C erhitzt wird. Die erhaltenen Entschäumer sind in alkalischen Lösungen stabil. Gemäß US-PS 3 235 509 werden Lewis-Säuren als Kondensationskatalysatoren während des Erhitzens zugesetzt, wobei sich eine vorherige Hydrophobierung der Kieselsäure erübrigt. Die DE-AS 17 69 940 empfiehlt für den gleichen Zweck alkalische Katalysatoren, zum Beispiel Alkali- beziehungsweise Tetraalkylammoniumhydroxide. Der Katalysator wirkt bei diesem Verfahren

/2

nur an der Grenzfläche zwischen Polysiloxan und Füllstoff, und es kommt nicht zu Spaltungs- und Polymerisationsreaktionen.

Ein anderer Weg wird in der DE-AS 16 19 859 (US-PS 3 455 839) beschritten. Zur Herstellung stabiler Schaumverhütungsmittel werden Gemische aus (I) Dimethylpolysiloxanen, die eine Viskosität von 20 bis 1500 cSt/25 °C aufweisen, (II) harzartigen, aus $(CH_3)_3SiO_{1/2}$- und $SiO_2$-Einheiten im Verhältnis 0,6 : 1 bis 1,2 : 1 aufgebauten Organopolysiloxanen und (III) Kieselsäure-Aerogelen hergestellt, indem man die Einzelkomponenten in beliebiger Reihenfolge miteinander bei Raumtemperatur oder Temperaturen bis 170 °C miteinander verrührt. Katalysatoren werden nicht angewendet, so daß es lediglich zu einer Fixierung auf der Kieselsäure, nicht jedoch zu einer Vernetzungsreaktion zwischen dem Dimethylpolysiloxan und dem harzartigen Polysiloxan kommt. Die Verfahrensprodukte bestehen daher im wesentlichen aus Gemischen und nicht aus Blockpolymerisaten.

Die vorstehend beschriebenen Schauminhibitoren sind zwar in wäßrigen Alkali- beziehungsweise Tensidlösungen wirksam und so hinreichend stabil, so daß innerhalb des Anwendungszeitraumes, beispielsweise während eines Wasch- und Reinigungsprozesses keine Einbuße an schauminhibierender Wirkung eintritt. Vermischt man jedoch die Inhibitoren mit in üblicher Weise zusammengesetzten, beispielsweise Alkalien und Tenside enthaltenden Waschmitteln, so geht mit fortschreitender Lagerzeit ihre Wirkung mehr oder weniger stark zurück, so daß nach einer mehrwöchigen Lagerung der Mittel Schaumprobleme bei ihrer Anwendung auftreten können. Dieser Wirkungsverlust ist noch größer, wenn man die Schauminhibitoren - im Interesse einer homogenen Verteilung im Wasch-

/3

mittel - dem pastenförmigen Waschmittelansatz (Slurry) zumischt und zusammen mit den übrigen Waschmittelbestandteilen versprüht.

Zur Vermeidung einer schädlichen Wechselwirkung des Polysiloxan-Entschäumers mit den alkalischen Bestandteilen eines Reinigungsmittels schlägt zum Beispiel die DE-OS 20 50 768 vor, zunächst die Polysiloxan in einer wäßrigen Lösung eines nichtionischen Tensids zu emulgieren und diese Emulsion den alkalihaltigen Mitteln zuzusetzen. Gemäß DE-OS 22 32 262 werden die Organopolysiloxane zunächst auf Natriumtripolyphosphat aufgebracht und dieses Vorgemisch anschließend mit den übrigen Waschmittelbestandteilen vereinigt. In der DE-OS 23 38 468 werden die Wechselwirkungen zwischen den Schauminhitoren und den in Wasch- und Reinigungsmitteln enthaltenen Tensiden für den Rückgang der schaumdämpfenden Wirkung verantwortlich gemacht und vorgeschlagen, die Polysiloxane auf eine Trägersubstanz aufzubringen und die erhaltenen Granulate zusätzlich mit einem für Tenside undurchdringlichen Hüllmaterial zu versehen. Zu den für diese Arbeitsweise vorgeschlagenen Polysiloxanen zählen vorzugsweise Gemische aus Polydimethylsiloxanen, Siloxanharzen und silanierter Kieselsäure, die somit den Verfahrensprodukten gemäß DE-AS 16 19 859 entsprechen.

Der Nachteil der angeführten Verfahren beziehungsweise Verfahrensprodukte besteht darin, daß sie nicht auf möglichst einfache Weise, beispielsweise durch Einbringen in den Waschmittelslurry und nachfolgendes Versprühen, in dem Waschmittel homogen verteilt werden können. Vielmehr sind mehrstufige Granulier- und Mischverfahren erforderlich, um zu verhindern, daß die Wirkung der Schauminhibitoren bei der Herstellung und Lagerung der

Mittel nachläßt. Besondere Probleme ergeben sich hinsichtlich der letzten Mischstufe, nämlich der homogenen Einarbeitung der vergleichsweise geringen Menge an siloxanhaltigem Pulvervorgemisch in die Hauptmenge des Waschmittels. Ein intensives Mischen oder Vermahlen würde zwangsläufig zu schlechteren Pulverqualitäten infolge Staubbildung und Zerstörung der Hohlkugelstruktur der sprühgetrockneten Pulveranteile führen, während andererseits Inhomogenitäten Schaumprobleme bei der Anwendung bedingen können.

In der DE-OS 29 52 287 wird ein Verfahren zur Herstellung eines als Schauminihibitor geeigneten Polysiloxan-Blockpolymerisates vorgeschlagen, mit dem diese Nachteile behoben werden sollen. Dieses Verfahren ist dadurch gekennzeichnet, daß man ein Gemisch aus (A) 100 Gewichtsteilen eines bei 20 °C flüssigen Polydimethylsiloxans und (B) 2 bis 20 Gewichtsteilen eines räumlich vernetzten, Hydroxylgruppen enthaltenden Organopolysiloxanharzes mit einem Molekulargewicht von 1000 bis 10000 in Gegenwart einer Lewis-Säure oder eines basischen Stoffes als Katalysator und einem organischen, mit den Reaktionspartnern nicht reaktionsfähigen Lösungsmittels auf Temperaturen oberhalb 80 °C erhitzt, bis die Viskosität nach Durchlaufen einer Induktionsperiode stetig ansteigt und einen Wert von mindestens 200 mPa·s, vorzugsweise 300 bis 10000 mPa·s, bei 20 °C erreicht hat, worauf man das Blockpolymerisat mit (C) 0,5 bis 15 Gewichtsteilen eines Siliciumdioxid-Aerogels, das vorzugsweise silaniert ist, in an sich bekannter Weise vermischt und erhitzt. Das Organopolysiloxanharz (B) ist aus Strukturelementen der allgemeinen Formel

$$-O_{1/2}-\overset{\displaystyle R}{\underset{\displaystyle Y}{Si}}-X$$

/5

aufgebaut, worin R zu 40 bis 100 Mol-% aus einem Phenyl-, Phenylethyl- oder Alkylrest mit 2 bis 8 C-Atomen und zu 0 bis 60 Mol-% aus einem $CH_3$-Rest, X und Y unabhängig voneinander aus den Resten R, OH, $O_{1/2}$, $CH_3$ oder $OC_4H_{2n-1}$ mit n = 1 bis 4 bestehen, mit der Maßgabe, daß der Anteil der OH-Gruppen 0,1 bis 10 Gew.-% beträgt (bezogen auf das Polysiloxanharz).

Produkte mit guten Inhibitoreigenschaften erfordern im allgemeinen Reaktionszeiten von 4 bis 20 Stunden. Die Umsetzung kann in Gegenwart inerter Lösungsmittel, die oberhalb 80 °C sieden, durchgeführt werden. Der Anteil der Lösungsmittel beträgt 0,3 bis 1,5 Volumenteile, bezogen auf Gewichtsteile des Komponenten A und B. Die Lösungsmitelmenge beeinflußt den Polymerisationsgrad und die Viskosität des Endproduktes. Probleme ergaben sich jedoch dadurch, daß es bei Anwendung geringer Lösungsmittelmengen im Verlauf der Reaktion zu einem sehr starken Viskositätsanstieg kommen konnte, und daß in diesem Stadium die Reaktion nicht mehr rechtzeitig abgestoppt werden konnte. In diesen Fällen kam es zur Bildung zähflüssiger beziehungsweise gelartiger, nicht mehr weiter verarbeitbarer Produkte. Es war daher notwendig, das Reaktionsgemisch während der verhältnismäßig langen Reaktionszeit ständig zu überwachen.

Es bestand daher die Aufgabe, durch eine geeignete Modifizierung der Reaktionsbedingungen eine Verkürzung der Reaktionszeit und eine geeignete Methode zum rechtzeitigen und sicheren Beenden des Polymerisationsverlaufes zu erzielen und darüberhinaus die Eigenschaften beziehungsweise die Verarbeitbarkeit der Verfahrensprodukte noch weiter zu verbessern. Diese Aufgabe wird durch die folgende Erfindung gelöst.

Gegenstand der Erfindung ist ein Verfahren zur Herstellung eines Schauminhibitors mit einem Gehalt an einem Polysiloxan-Blockpolymeren durch Erhitzen eines Gemisches aus

A) einem bei 20 °C flüssigen Polydimethylsiloxan,

B) einem räumlich vernetzten Polysiloxanharz mit einem Molekulargewicht von 1000 bis 10000, das aus Strukturelementen der allgemeinen Formel

$$O_{1/2} - \underset{\substack{| \\ Y}}{\overset{\substack{R \\ |}}{Si}} - X$$

besteht, worin R zu 40 bis 100 Mol-% aus einem Phenyl-, Phenylethyl- oder Alkylrest mit 2 bis 8 C-Atomen und zu 0 bis 60 Mol-% aus einem $CH_3$-Rest, X und Y unabhängig voneinander aus den Resten R, OH, $O_{1/2}$, $CH_3$ oder $OC_nH_{2n-1}$ mit n = 1 bis 4 bestehen, mit der Maßgabe, daß der Anteil der OH-Gruppen 0,1 bis 10 Gew.-%, bezogen auf das Polysiloxanharz, beträgt,

in Gegenwart eines basischen Katalysators und eines organischen, mit den Reaktionspartnern nicht reaktionsfähigen, zwischen 80 und 200 °C siedenden Lösungsmittels auf Temperaturen oberhalb 80 °C, bis die Viskosität nach Durchlaufen einer Induktionsperiode stetig ansteigt, worauf man das entstandene Blockpolymerisat mit

C) einem ggf. silanierten Siliciumdioxid-Aerogel im Gewichtsverhältnis 100 : 1 bis 100 : 10 vermischt und erhitzt, dadurch gekennzeichnet, daß man die Umsetzung von 95 bis 65 Gewichtsteilen der Komponente A mit 5 bis 35 Gewichtsteilen der Komponente B in Gegenwart von 25 bis 40 Gew.-%, bezogen auf das Reaktionsgemisch, des Lösungsmittels innerhalb eines Zeitraumes von 0,5 bis 3 Stunden durchführt, bis das vom Lösungsmittel befreite Reaktionsgemisch eine Viskosität von 1000 bis 5000 mPa.s aufweist, worauf man die Umsetzung durch Inaktivierung des Katalysators abstoppt, das Lösungsmittel entfernt und das entstandene Blockpolymerisat nach Zu- /7

mischen von 1 bis 10 Gewichtsteilen der Komponente C auf Temperaturen von 120 bis 200 °C erhitzt, bis die Viskosität des Produktes auf 10000 bis 160000 mPa·s gestiegen ist.

Als flüssige Polydimethylsiloxane (Reaktionskomponente A) eignen sich in erster Linie cyclische, 3 bis 6 oder auch mehr Siloxangruppen aufweisende Polydimethylsiloxane, wie Hexamethylcyclotrisiloxan, Octamethylcyclotetrasiloxan, Decamethylcyclopentasiloxan, Dodecamethylcyclohexasiloxan und deren Gemische. Geeignet sind ferner lineare Polydimethylsiloxan-$\alpha,\omega$-diole mit durchschnittlich 5 bis 100, vorzugsweise 30 bis 80 $(CH_3)_2SiO$-Einheiten sowie Polydimethylsiloxangemische, wie sie nach der Hydrolyse von Dimehtyldichlorsilan anfallen. Solche Gemische bestehen beispielsweise zu 30 bis 80 Gewichtsprozent aus cyclischen und zu 20 bis 70 Gewichtsprozent aus den beschriebenen linearen Polydimethylsiloxanen.

Die Polysiloxanharze (Reaktionskomponente B) sind bekannte Verbindungen, die bei der Hydrolyse von Phenyl-, Phenylethyl- oder Alkyltrichlorsilanen beziehungsweise deren Co-Hydrolyse mit Dimethylchlorsilanen entstehen. Das Phenylethylentrichlorsilan ist durch Anlagerung von Styrol an Trichlorsilan zugänglich. Bei der Hydrolyse bilden sich räumlich vernetzte Harze, die einen Gehalt an freien, reaktionsfähigen Hydroxylgruppen aufweisen. Wird die Hydrolyse in Gegenwart niederer Alkohole der Formel $C_nH_{2n-1}OH$ durchgeführt, so können sich außerdem Hydroxyalkylreste ausbilden, die bei der erfindungsgemäß durchgeführten Blockpolymerisation ebenfalls reaktionsfähig sind.

Das Molekulargewicht der Polysiloxanharze (B) beträgt

1000 bis 10000, vorzugsweise 1200 bis 5000. Als besonders geeignet haben sich die folgenden Polysiloxanharze erwiesen:

$B_1$) Phenyl-methyl-polysiloxanharze mit einem Anteil von 1 bis 6 Gew.-%, insbesondere 2 bis 5 Gew.-% an Hydroxylgruppen und einem Molverhältnis von Phenyl- zu Methylgruppen von 2 : 3 bis 10 : 1, insbesondere 1 : 1 bis 5 : 1, erhältlich durch Co-Hydrolyse von Phenyltrichlorsilan und Dimethyldichlorsilan.

$B_2$) Phenylethyl-polysiloxanharze mit einem Anteil von 0,5 bis 8 Gew.-%, insbesondere 1 bis 5 Gew.-% an Hydroxylgruppen, erhältlich durch Hydrolyse von Phenylethyltrichlorsilan.

$B_3$) Alkylpolysiloxanharze, in denen die Alkylgruppen verzweigt sind und vorzugsweise 3 bis 8 C-Atome aufweisen, mit einem Anteil von 0,5 bis 8, insbesondere 1 bis 5 Gew.-% an Hydroxylgruppen, erhältlich durch Hydrolyse von Alkyltrichlorsilan. Geeignete Alkylgruppen sind zum Beispiel Isopropyl-, Isobutyl-, Isoamyl- und 2-Ethylhexylgruppen.

$B_4$) Phenylethyl-methyl-polysiloxane beziehungsweise $C_3$-$C_8$- Alkyl-methyl-polysiloxane (mit verzweigtem $C_3$-$C_8$-Alkylrest) mit einem Anteil von 1 bis 6, vorzugsweise 2 bis 5 Gew.-% an Hydroxylgruppen und einem Molverhältnis von Phenylethyl- beziehungsweise $C_3$-$C_8$-Alkylgruppen zu Methylgruppen von 2 : 3 bis 100 : 1, erhältlich durch Co-Hydrolyse von Phenylethyl- beziehungsweise $C_3$-$C_8$-Alkyltrichlorsilan mit Dimethyldichlorsilan.

Anstelle der chlorsubstituierten Silane können bei der Hydrolyse beziehungsweise Co-Hydrolyse auch die entsprechenden alkoxyl-substituierten Siloxane mit $C_1$-$C_4$-Alkoxylresten eingesetzt werden. Im Polysiloxanharz (B) liegt der Anteil derartiger Alkoxylgruppen im allgemeinen unter 1 Mol-%.

Auf 95 bis 65 Gewichtsteile Polydimethylsiloxan (A) kommen 2 bis 25, vorzugsweise 5 bis 35 und Polysiloxanharz (B) zur Anwendung. Mit steigendem Anteil an (B) sowie zunehmendem Molekulargewicht, verbunden mit einem Viskositätsanstieg, nimmt die schauminhibierende Wirkung der Verfahrensprodukte zu.

Da neben der Blockpolymerisation auch eine Homopolymerisation des Polydimethylsiloxans stattfinden kann, können gegebenenfalls zur Steuerung des Polymerisationsgrades noch permethylierte niedermolekulare Siloxane, die einen Kettenabbruch bewirken, wie Hexamethyldisiloxan, Octamethyltrisiloxan oder Dekamethyltetrasiloxan, zugesetzt werden. Ihre Menge richtet sich nach dem beabsichtigten Polymerisationsgrad und kann bis zu 20 Mol-Prozent, vorzugsweise bis zu 10 Mol-Prozent, bezogen auf eingesetzte Reaktionskomponente (A) betragen. In der Mehrzahl der Fälle sind solche Zusätze nicht erforderlich.

Geeignete Katalysatoren sind quartäre Ammoniumbasen mit 1 bis 4 C-Atomen aufweisenden Alkyl- und/oder Hydroxyalkylgruppen, insbesondere Tetramethyl- oder Tetraethylammoniumhydroxid, ferner Alkalihydroxide, insbesondere Kaliumhydroxid. Als leicht zugängliche und sehr gut brauchbare Katalysatoren haben sich äquimolekulare Gemische aus Tetraalkylammoniumsalzen, z.B. Tetramethylammoniumchlorid und Kaliumhydroxid erwiesen. Auf 100 Gewichtsteile der Reaktionskomponente (A) bezogen kommen 0,001 bis 1, vorzugsweise 0,03 bis 0,2 Gewichtsteile Katalysator zum Einsatz.

Geeignete organische Lösungsmittel sind oberhalb 80 °C siedende Kohlenwasserstoffe, zum Beispiel Paraffinkohlenwasserstoffe (Siedebereich 80 bis 200 °C), Benzol, Toluol, Xylol, Cumol, Tetralin, Dekalin, Methylcyclohexan und p-Menthan, ferner Ester, wie Isopropylacetat, Butylacetat und Glykoldiacetat. Prinzipiell ist auch die Verwendung anderer Lösungsmittel, wie Chlorkohlenwasserstoffe oder hochsiedender Ether möglich, jedoch sind derartige Stoffe wegen ihrer Toxität (Chlorkohlenwasserstoffe) beziehungsweise möglicher Peroxidbildung (Ether) oder ihrer höheren Gestehungskosten von geringem Interesse. Vorzugsweise werden solche Lösungsmittel verwendet, in denen sich der Katalysator löst, da eine homogene Katalyse die Blockpolymerisation fördert. Als besonders brauchbar haben sich aromatische Kohlenwasserstoffe, wie Toluol, Ethylbenzol und Xylol erwiesen.

Die Menge des Lösungsmittels sowie das Mengenverhältnis der Komponente (A) zur Komponente (B) beeinflussen innerhalb gewisser Grenzen die Reaktionsgeschwindigkeit sowie den Polymerisationsgrad und damit die Viskosität des Reaktionsproduktes. Lösungsmittelmenge und Mischungsverhältnis von (A) zu (B) werden innerhalb der beanspruchten Bereiche so gewählt, daß die Polymerisation innerhalb 0,5 bis 3 Stunden genügend fortgeschritten ist, was sich durch die erreichte Viskosität zu erkennen gibt. Höhere Anteile an der Komponente (B) führen zu vergleichsweise hohen Anfangs- und Endviskositäten und erfordern kürzere Reaktionszeiten beziehungsweise die Anwendung größerer Lösungsmittelmengen, während bei Gemischen mit geringeren Anteilen an Komponente (B) weniger Lösungsmittel eingesetzt wird.

Die Viskosität des mit dem Lösungsmittel verdünnten Reaktionsgemisches ist der Viskosität des vom Lösungsmittel befreiten Polymerisationsproduktes proportional. Es kann daher zweckmäßig sein, für in bestimmter Weise zusammengesetzte Reaktionsgemische durch Vorversuche den zeitlichen Viskositätsanstieg zu bestimmen und eine Beziehung, z.B. in Form einer Eichkurve, zu der Viskosität des lösungsmittelfreien Polymerisationsproduktes aufzustellen. Auf diese Weise läßt sich der geeignete Zeitpunkt zum Abstoppen der Polymerisationsreaktion leicht ermitteln.

Die Reaktionstemperatur liegt oberhalb 80 °C. Sie ist, sofern man bei atmosphärischem Druck bei der Siedetemperatur des jeweiligen Lösungsmittels arbeitet, von dessen Siedetemperatur abhängig. Temperaturen oberhalb 200 °C sind nicht erforderlich. Vorzugsweise arbeitet man daher bei Temperaturen zwischen 80 und 200 °C, insbesondere 100 bis 160 °C.

Zu Beginn der Reaktion während einer Induktionsperiode, die je nach Temperatur 2 bis 15 Minuten betragen kann, ist der Viskositätsverlauf uneinheitlich. In diesem Abschnitt ist die Viskosität des Reaktionsgutes zunächst von der Viskosität der Einzelbestandteile abhängig und kann sehr unterschiedliche Werte annehmen. Mit fortschreitender Polymerisation macht sich in zunehmendem Maße der Einfluß des Blockpolymerisats bemerkbar und die Viskosität steigt stetig an. Es können bereits nach mindestens einhalbstündiger Erhitzung auf Temperaturen oberhalb 100 °C gut brauchbare Produkte erhalten werden, jedoch lassen sich deren Eigenschaften durch Verlängern der Erhitzungsperiode auf 1 bis 3 Stunden vielfach noch verbessern. Vorzugsweise beträgt die Erhitzungsperiode im Temperaturbereich von 100 bis 160 °C 1 bis 2 Stunden.

/12

Das Abstoppen der Polymerisation erfolgt durch Inaktivierung des Katalysators und zwar zweckmäßigerweise durch Zusatz äquivalenter Mengen an neutralisierenden Säuren. Vorzugsweise werden organische, in dem Reaktionsgemisch lösliche und folglich homogen verteilbare Säuren, wie Essigsäure oder Ameisensäure, verwendet. Ein Abstoppen kann auch durch Zusatz weiterer Anteile an Lösungsmittel erfolgen, jedoch ist zu beachten, daß durch den bewirkten Verdünnungseffekt der Katalysator nicht inaktiviert wird und daß es nach einem kurzzeitigen Viskositätsabfall erneut zu einem Viskositätsanstieg und - damit verbunden - zu einer weiterführenden Polymerisation kommt. Die Inaktivierung mittels Säuren, die auch in Lösungsmitteln gelöst sein können, ist daher vorzuziehen.

Das Lösungsmittel kann im Anschluß an die Polymerisation oder auch während der noch erfolgenden Umsetzung des Polymerisationsproduktes mit der silanierten Kieselsäure erfolgen. Lösungsmittelreste werden zweckmäßigerweise durch Erhitzen unter vermindertem Druck entfernt.

Als Kieselsäure eignet sich eine solche mit einer Teilchengröße von etwa 6 bis 30 $m\mu$ und einer spezifischen Oberfläche von wenigstens 80 $m^2/g$, wie sie beispielsweise durch pyrogene Hydrolyse von Siliciumtetrachlorid und anschließende Silanierung erhältlich ist. Die Silanierung erfolgt in bekannter Weise durch Behandlung mit Trimethylchlorsilan, Dimethyldichlorsilan oder cyclischen Polydimethylsiloxanen hydrophobierter Kieselsäure. Gegenüber einer nichtsilanierten Kieselsäure bietet sie den Vorteil einer schnelleren und besseren Homogenisierung. Auf 100 Gewichtsteile Blockpolymerisat kommen definitionsgemäß 1 bis 10, vorzugsweise 2 bis 8 Gewichtsteile der silanierten Kieselsäure zur Anwendung. Das Homogenisieren erfolgt in bekannter Weise unter intensiver mechanischer Bearbeitung des Mischgutes zunächst bei Temperaturen zwischen 20 und bis 100 $^{o}$ C. Während des nachfolgenden Erhitzens auf Temperaturen zwischen 100 und 250 $^{o}$C, vorzugsweise 120 bis 200 $^{o}$C wird das Mischen zweckmäßigerweise fortgesetzt. Im allgemeinen reicht eine Erhitzungsdauer von 2 bis 5 Stunden für die Bildung stabiler Addukte aus.

Die Viskosität der mit silanierter Kieselsäure behandelten Polymere beträgt 10000 bis 16000 mPa.s, vorzugsweise 15000 bis 100000 mPa.s. Die Produkte, insbesondere mit Viskositäten oberhalb 12000 mPa.s, zeichnen sich durch eine sehr hohe Entschäumerwirkung aus und übertreffen in dieser Hinsicht die aus der DE-AS 29 52 287 bekannten Produkte, d. h. die für ein bestimmtes Anwendungsgebiet erforderlichen Einsatzmengen können bei gleicher Wirkung auf die Hälfte bis ein Zehntel herabgesetzt werden. Darüber hinaus ist der Aktivitätsverlust nach dem Einarbeiten in tensidhaltige flüssige oder feste Zubereitungen insbesondere bei längeren Standzeiten noch erheblich geringer.

Bei Einsatz hochviskoser Produkte können Dosierungsbeziehungsweise Verarbeitungsprobleme auftreten, welche die Weiterverwendung erschweren. Es wurde nun ein Verfahren gefunden, mit dem sich diese Probleme in einfacher Weise lösen lassen, ohne daß es zu einer Wirkungseinbuße hinsichtlich der Entschäumerwirkung kommt. Dieses Verfahren ist dadurch gekennzeichnet, daß man die Verfahrensprodukte im Gewichtsverhältnis 98 : 2 bis 50 : 50, vorzugsweise 95 : 5 bis 60 : 40 mit einem niedrigerviskosen Silikonöl und/oder einem Paraffinöl vermischt. Als geeignete Silikonöle kommen z. B. Dimethylpolysiloxane mit einer Viskosität von 100 bis 20000 mPa.s infrage. Als Mischungskomponente sind Silikonöle sowie Silikonöle mit einem Gehalt an 1 bis 10 Gew.-% Kieselsäure-Aerogel bzw. die aus der DE 29 52 287 bekannten niedrigerviskosen Blockpolymeren auf Grund ihrer höheren Wirksamkeit bevorzugt. Die Homogenisierung der aus dem hochviskosen Verfahrensprodukt und dem niedrigerviskosen, aus Silikonöl und/oder Paraffinöl bestehenden Modifizierungsmittel erfolgt zweckmäßigerweise bei erhöhter Temperatur, vorzugsweise bei 100 bis 200 $^{o}C$, wobei es sich empfiehlt, in einer Inertgasatmosphäre zu arbeiten.

Es ist überraschend, daß der Zusatz an niedrigviskosem Modifizierungsmittel, dessen Entschäumerwirkung vergleichsweise gering ist oder unter vergleichbaren Einsatzbedingungen vollständig verlorengehen kann, die schauminhibierenden Eigenschaften der Verfahrensprodukte nicht beeinträchtigt, sondern vielmehr in zahlreichen Fällen noch synergistisch steigert.

Die Verfahrensprodukte und ihre Mischungen mit niedrigviskosen Modifizierungsmitteln sind hervorragend als Schauminhibitoren für beliebige Anwendungsgebiete geeignet, wie Papierindustrie, Erdölgewinnung, Zuckerraffination, Textilindustrie, Abwasserbehandlung, in Latex- und Kunstharzdispersionen, Schneidölemulsionen sowie Destillations- und Flotationsverfahren. Sie sind gegenüber Alkalien hinreichend stabil und werden durch wäßrige Tensidlösungen nicht inaktiviert. Daher lassen sie sich mit besonderem Vorteil in Waschmitteln einsetzen, wobei überraschenderweise ein Einarbeiten in den Waschmittelslurry und anschließendes Versprühen nicht zu einer Wirkungseinbuße führt. In Wasch- und

Reinigungsmitteln eingesetzt sind sie um 1 bis 2 Zehnerpotenzen wirksamer als die bisher für diesen Zweck vorgeschlagenen Schauminhibitoren auf Silikonbasis und übertreffen hinsichtlich dieser Eigenschaften die bisher bekannten Mittel.

Ein weiterer Gegenstand des Schutzbegehrens ist daher die Verwendung der Verfahrensprodukte in Wasch-, Spül-, Reinigungs- und Textilnachbehandlungsmitteln. Von besonderem Interesse sind dabei solche reinigend wirkenden Mittel, die in geschlossenen Spül- und Waschmaschinen mit starker mechanischer Bearbeitung des Reinigungsgutes, zum Beispiel Wasch- und Geschirrspülautomaten, zur Anwendung kommen.

Der Gehalt derartiger Wasch-, Spül-, Reinigungs- und Nachbehandlungsmittel an den erfindungsgemäßen Verfahrensprodukten kann je nach Schaumintensität der anwesenden Wirkstoffe und Ausmaß des beabsichtigen Effektes 0,001 bis 1, vorzugsweise 0,005 bis 0,5 Gewichtsprozent betragen. Wegen der hervorragenden Inhibitorwirkung der Verfahrensprodukte im Vergleich zu bekannten Inhibitoren auf Polysiloxan-Basis kommt man im allgemeinen mit sehr geringen Mengen an Schauminhibitor aus.

Pulverförmige Waschmittel werden vorteilhaft durch Sprühtrocknung in bekannter Weise aus einem wäßrigen Slurry hergestellt, wobei die erfindungsgemäßen Verfahrensprodukte unmittelbar im Slurry dispergiert und mit diesem zusammen versprüht werden können. Gegebenenfalls können die Wasch- und Reinigungsmittel auch durch bekannte Granulierungsverfahren hergestellt werden. Auch in diesem Falle können die erfindungsgemäßen

Verfahrensprodukte unmittelbar oder im Gemisch mit Tensiden und anderen Bestandteilen in die Granulate eingearbeitet werden, was die Verarbeitung erheblich vereinfacht.

Die in der angegebenen Weise hergestellten pulverförmigen Waschmittel zeichnen sich durch ein günstiges Schaumverhalten aus. Die geringen Mengen an Verfahrensprodukten, die für eine weitgehende Schauminhibierung erforderlich sind, haben im Gegensatz zu den bekannten und vergleichsweise weniger wirksamen Polysiloxanentschäumern keinen negativen Einfluß auf die Benetzungseigenschaften der Pulvergemische, weshalb auch keine Schwierigkeit im Einspülverhalten bei der Anwendung in Wasch- und Spülautomaten zu befürchten sind.

Ein weiterer Vorteil ist, daß die schaumdämpfende Wirkung der Siloxane bei der Lagerung der Pulvergemische keine Einbuße erleidet. Auch bei wiederholter Anwendung der Mittel tritt keine Vergrauung der Gewebe beziehungsweise keine Beaufschlagung der Waschmaschinenteile mit einem nur sehr schwer entfernbaren Siloxanfilm ein.

Zwecks Konfektionierung für beliebige Einsatzgebiete können die erfindungsgemäßen Polysiloxan-Blockpolymerisate in Lösungsmitteln gelöst oder unter Zusatz üblicher Emulgatoren in Emulsionen überführt werden.

## Beispiele

### Beispiel 1

a) Die Reaktionskomponente (A) bestand aus einem handelsüblichen Polydimethylsiloxan, in dem etwa 67 Gewichtsprozent als cyclische Verbindungen und etwa 33 Gewichtsprozent als lineare Polydimethylsiloxane mit etwa 15 bis 100 $(CH_3)_2SiO$-Gruppen vorlagen. Die Reaktionskomponente (B) bestand aus einem Phenyl-methylsiloxanharz mit einer auf osmometrischem Wege gemessenen mittleren Molmasse von 1600, einem Molverhältnis von Phenyl- zu Methyl-Gruppen von 1 : 0,8 und einem Gehalt an Hydroxylgruppen von 3,3 Gew.-%.

114 kg des Polydimethylsiloxans (A) und 11,4 kg Methylphenylsiloxanharz (B) wurden in 68 kg Toluol gelöst, mit 0,2 kg Tetramethylammoniumhydroxid versetzt und 2 Stunden in einer Stickstoffatmosphäre unter ständigem Rühren auf 110 °C erhitzt, wonach die Lösung eine Viskosität von 40 mPa.s (20 °C) aufwies. Anschließend wurde der Katalysator durch Zusatz von 0,4 kg Essigsäure neutralisiert. Nach Entfernung flüchtiger Anteile bei 180 °C im Vakuum wies das Polymere eine Viskosität von 3000 mPa.s bei 20 °C auf.

Zur Herstellung eines Schauminhibitors wurde das Blockpolymerisat mit 5 Gewichtsprozent einer silanierten Kieselsäure, erhältlich durch Umsetzung eines Kieselsäure-Aerogels mit Dimethyldichlorsilan, homogen vermischt und unter Rühren 4 Stunden auf 240 °C unter Stickstoff erhitzt. Das erhaltene Produkt wies eine Viskosität von 52000 mPa.s (20 °C) auf.

b) 50 kg des hochviskosen Produktes wurden mit 3,5 kg dünnflüssigem Paraffinöl versetzt und unter einer Stickstoffatomosphäre 15 Minuten bei 180 °C homogenisiert. Die Viskosität des Mischproduktes betrug 22500 mPa.s (20 °C). Das Produkt wies die gleiche Schauminhibitorwirkung auf wie das ungemischte Produkt, war aber wesentlich besser zu handhaben.

Beispiel 2

a) Beispiel 1 wurde wiederholt, wobei die Polymerisationsreaktion bei einer Viskosität der Lösung von 46 mPa.s (20 °C) abgestoppt wurde. Das vom Lösungsmittel befreite Blockpolymerisat wies eine Viskosität von 4800 mPa.s, das mit 5 Gew.-% hochdisperser Kieselsäure umgesetzte Produkt eine solche von 72000 mPa.s auf.

b) Zu 50 kg des Produktes, das unter Stickstoff auf 150 °C erhitzt worden war, wurden 7,5 kg Polydimethylsiloxan (Viskosität 150 mPa.s bei 20 °C) unter Rühren zugefügt. Das Mischprodukt wies bei unverändert guten Schaumdämpfungseigenschaften eine Viskosität von 25000 mPa.s auf.

Beispiel 3

a) In einem 250 l-Kessel wurde eine Lösung von 11,4 kg Phenylmethylsilikonharz, 76 kg cyclischen und 38 kg linearen Polydimethylsiloxanen in 68 kg Toluol bei 110 °C unter Zugabe von 0,2 kg Tetramethylammoniumhydroxid bei 110 °C auf eine Viskosität von 43 cP (20 °C) aufpolymerisiert. Die Reaktion wurde nach 100 Minuten durch Zugabe von 5 kg Toluol verlangsamt und nach 3 Stunden durch Zugabe von Essigsäure gestoppt. Die flüchtigen Komponenten wurden durch Vakuumdestillation entfernt (zuletzt 180 °C bei 1 mbar). Der Rückstand, der eine Viskosität von 4000 CP bei 20 °C

aufwies, wurdemit 5 % hochdisperser Kieselsäure versetzt und 4 Stunden unter Inertgas bei 240 °C nachbehandelt. Es resultieren 105 kg hochaktiver Silikonentschäumer. Die Viskosität beträgt 33500 cP bei 20 °C.

b) 100 kg dieses hochviskosen Produktes wurden mit 50 kg eines Dimethylpolysiloxan-Entschäumers, der einen Gehalt an 5 Gew.-% Kieselsäure-Aerogel und eine Viskosität von 11500 mPa.s aufwies, unter Stickstoff auf 150 °C erhitzt und 10 Minuten homogenisiert. Das Mischprodukt wies eine Viskosität von 16000 mPa.s auf und übertraf beide Einzelprodukte hinsichtlich Schauminhibierung und Wirkungskonstanz bei der Einarbeitung in einen Waschmittelslurry mit nachfolgender Zerstäubungstrocknung.

Beispiel 4

100 kg eines gemäß Beispiel 2a) erhaltenen kieselsäurehaltigen Blockpolymerisates mit einer Viskosität von 77000 mPa.s wurden mit 50 kg eines Schauminhibitors aus Dimethylpolysiloxan und 8 Gew.-% Kieselsäure (Viskosität 7300 mPa.s), wie in Beispiel 2b) beschrieben bei 150 °C homogenisiert. Es resultiert ein Gemisch mit einer Viskosität von 30000 mPa.s, daß sich durch eine sehr hohe Schauminhibitorwirkung bereits bei sehr geringer Anwendungskonzentration und Wirkungskonstanz bei Einarbeiten in einen Waschmittelslurry und mehrmonatige Lagerung des sprühgetrockneten Waschmittels auszeichnete.

## Patentansprüche

1. Verfahren zur Herstellung eines Schauminhibitors mit einem Gehalt an einem Polysiloxan-Blockpolymeren durch Erhitzen eines Gemisches aus
   A) einem bei 20 $^{o}C$ flüssigen Polydimethylsiloxan,
   B) einem räumlich vernetzten Polysiloxanharz mit einem Molekulargewicht von 1000 bis 10000, das aus Strukturelementen der allgemeinen Formel

$$O_{1/2} - \overset{\overset{\displaystyle R}{|}}{\underset{\underset{\displaystyle Y}{|}}{Si}} - X$$

   besteht, worin R zu 40 bis 100 Mol-% aus einem Phenyl-, Phenylethyl- oder Alkylrest mit 2 bis 8 C-Atomen und zu 0 bis 60 Mol-% aus einem $CH_3$-Rest, X und Y unabhängig voneinander aus den Resten R, OH, $O_{1/2}$, $CH_3$ oder $OC_nH_{2n-1}$ mit n = 1 bis 4 bestehen, mit der Maßgabe, daß der Anteil der OH-Gruppen 0,1 bis 10 Gew.-%, bezogen auf das Polysiloxanharz, beträgt,

   in Gegenwart eines basischen Katalysators und eines organischen, mit den Reaktionspartnern nicht reaktionsfähigen, zwischen 80 und 200 $^{o}C$ siedenden Lösungsmittels auf Temperaturen oberhalb 80 $^{o}C$, bis die Viskosität nach Durchlaufen einer Induktionsperiode stetig ansteigt, worauf man das entstandene Blockpolymerisat mit
   C) einem gegebenenfalls silanierten Siliciumdioxid-Aerogel vermischt und erhitzt, dadurch gekennzeichnet, daß man die Umsetzung von 95 bis 65 Gewichtsteilen der Komponente (A) mit 5 bis 35 Gewichtsteilen der Komponente (B) in Gegenwart von 25 bis 40 Gewichtsprozent, bezogen auf das Reaktionsgemisch, des Lösungsmittels innerhalb eines Zeitraumes von

0,5 bis 3 Stunden durchführt, bis das vom Lösungsmittel befreite Reaktionsgemisch eine Viskosität von 1000 bis 5000 mPa.s aufweist, worauf man die Umsetzung durch Desaktivierung des Katalysators abstoppt, das Lösungsmittel entfernt und das entstandene Blockpolymerisat nach Zumischen von 1 bis 10 Gewichtsteilen der Komponente (C) auf Temperaturen von 120 bis 220 °C erhitzt, bis die Viskosität des Produktes auf 10000 bis 160000 mPa.s gestiegen ist.

2. Verfahren nach Anspruch 1, dadurch gekennzeichnet, daß man die Umsetzung der Komponenten (A) und (B) bis zu einer Viskosität von 15000 bis 100000 mPa.s (20 °C) durchführt.

3. Verfahren nach Anspruch 1 und 2, dadurch gekennzeichnet, daß man das Siliciumdioxid enthaltende Blockpolymere bei einer Temperatur von 100 bis 200 °C im Gewichtsverhältnis 98 : 2 bis 50 : 50 mit einem niedrigerviskosen Silikonöl und/oder Paraffinöl bei einer Temperatur von 100 bis 200 °C vermischt.

4. Verfahren nach Anspruch 3, dadurch gekennzeichnet, daß man das Siliciumdioxid enthaltende Blockpolymere im Gewichtsverhältnis 95 : 5 bis 60 : 40 mit einem Dimethylpolysiloxan mit einer Viskosität von 100 bis 20000 mPa.s vermischt.

5. Verfahren nach Anspruch 4, dadurch gekennzeichnet, daß man ein Silikonöl mit einem Gehalt an 1 bis 10 Gewichtsprozent Kieselsäure-Aerogel zumischt.